# EUROPEAN PATENT APPLICATION

(11) **EP 1 967 901 A2**
(43) Date of publication of application: **10.09.2008**
(21) Application number: 08152472.0
(22) Date of filing: 07.03.2008
(51) Int. Cl.: G02F 1/31, G02B 6/35, G02F 1/13

(54) **Optical device with cascaded steering devices**

(30) Priority: 08.03.2007 US 893872 P; 15.01.2008 US 14736
(71) Applicant: Avanex Corporation, Fremont, CA 94538 (US)
(72) Inventor: Yuan, Haijun, Pleasanton, CA 94566 (US); Wu, Xuehua, Union City, CA 94587 (US); Lin, Christopher, El Cerrito, CA 94530 (US); Barbarossa, Giovanni, Saratoga, CA 95070 (US)
(74) Representative: Feray, Valérie

(57) **Abstract**

An optical switching device for wavelength divisional multiplexed signals uses cascaded arrays of optical steering devices for 1 x N routing of WDM optical signals, where N = 4, 8, 16, etc. Two cascaded arrays provide 1 x 4 switching; three cascaded arrays provide 1 x 8 switching; and so on. Each array is configured with independently controlled optical steering devices so that each wavelength channel of the WDM signal may be routed to any of N output ports. The optical steering devices may be micro-mirrors, liquid crystal-based polarization modulators, or a combination of both. By incorporating cascaded optical steering devices into a single WDM switching device, cost effective 1 x N switching of WDM optical signals may be realized.

## Description

### CROSS-REFERENCE TO RELATED APPLICATIONS

This application claims the benefit of U.S. Provisional Patent Application Ser. No. 60/893,872, filed March 8, 2007, entitled "Wavelength Selective Liquid Crystal Switch," the entire contents of which are incorporated by reference herein.

### BACKGROUND OF THE INVENTION

### Field of the Invention

Embodiments of the present invention relate generally to optical communication systems and components and, more particularly, to an optical device having cascaded optical steering devices.

### Description of the Related Art

In a wavelength division multiplexing (WDM) optical communication system, information is carried by multiple channels, each channel having a unique wavelength. WDM allows transmission of data from different sources over the same fiber optic link simultaneously, since each data source is assigned a dedicated channel. The result is an optical communication link with an aggregate bandwidth that increases with the number of wavelengths, or channels, incorporated into the WDM signal. In this way, WDM technology maximizes the use of an available fiber optic infrastructure; what would normally require multiple optic links or fibers instead requires only one.

It is often necessary to add, drop, or attenuate a light beam in WDM optical communication systems. This can be achieved by an optical switching device, which directs an input light beam to one of multiple output optical paths. In a 1 x 2 optical switching device, an input light beam enters through one input fiber and is directed to one of two output fibers. The input light beam so directed may be a complete WDM optical signal or an individual wavelength channel of a WDM optical signal. In either case, all optical energy of the input beam may be directed to a single output port, or a portion of the optical energy may be directed to each output port, depending on the purpose of the optical switching device, *i.e.,* simple switching vs. broadcasting or attenuation/equalization. More complicated optical switching is also used in optical communication systems, such as 2 x 2, 1 x N, and N x N switching of optical signals, which are realized by configuring multiple 1 x 2 devices in series, in parallel, or a combination of both.

The optical switching devices for WDM communication systems are quite complex, and include active and passive optical elements that must be manufactured and aligned to high tolerances for proper operation. Because of this, the manufacturing costs for assembly, testing and quality assurance of WDM optical switching devices is substantial. As bandwidth requirements for optical communication networks increase, it is desirable to reduce the per channel and per output port costs of WDM optical switching devices.

Accordingly, there is a need in the art for optical switching devices used in communications networks capable of performing more involved switching operations at a reduced cost per channel and/or per output port.

### SUMMARY OF THE INVENTION

Embodiments of the present invention generally provide an optical switching device that uses cascaded arrays of optical steering devices for routing of wavelength divisional multiplexed (WDM) optical signals.

In a first embodiment, an optical device comprises a diffracting element positioned in an optical path of an input beam for separating the input beam into its wavelength components and cascaded optical steering devices positioned to receive the wavelength components and configured to switch each of the wavelength components into at least one of N optical paths, where N is greater than or equal to 4. The cascaded optical steering devices may include a MEMS-based optical steering device and/or a liquid crystal (LC) based optical steering device.

In another embodiment, a wavelength selective switch comprises cascaded optical steering devices, wherein one of the cascaded optical steering devices includes an LC cell for polarizing incoming light beams and a beam deflecting unit for directing the incoming light beams to at least one of two optical paths in accordance with their polarization. Another one of the cascaded optical steering devices may include a MEMS mirror. The wavelength selective switch according to this embodiment may also comprise a diffracting element for separating an input beam into its wavelength components before the input beam reaches the cascaded optical steering devices.

In another embodiment, a 1 x N wavelength selective switch comprises an input port, a diffracting element for separating an input beam into its wavelength components, an optical switch assembly positioned to receive the wavelength components from the diffracting element and including a reflective element for redirecting the wavelength components onto the diffracting element, and a plurality of output ports for receiving at least one output beam generated by the diffracting element from the wavelength components. The optical switch assembly includes at least two optical steering devices that are arranged in a cascaded manner.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 is a functional diagram of a WDM optical device according to an embodiment of the invention.

Figure 2A illustrates a schematic plan view of a wavelength selective switch utilizing cascaded optical steering devices in accordance with one embodiment of the invention.

Figure 2B illustrates a schematic side view of the wavelength selective switch of Figure 2A.

Figure 2C is a schematic side view of a liquid crystal-based optical steering device that may be contained in an optical steering device array, according to one embodiment of the invention.

Figure 2D is a partial schematic side view of the wavelength selective switch of Figure 2A taken from section line a-a in Figure 2A.

Figure 3A is a perspective view of a wavelength selective switch containing cascaded arrays of liquid crystal-based optical steering devices, according to an embodiment of the invention.

Figure 3B illustrates a schematic side view of a beam polarization switching unit, inbound beams, and outbound beams, according to an embodiment of the invention.

For clarity, identical reference numerals have been used, where applicable, to designate identical elements that are common between figures. It is contemplated that features of one embodiment may be incorporated in other embodiments without further recitation.

### DETAILED DESCRIPTION

Embodiments of the invention contemplate WDM optical devices using cascaded optical steering devices for 1 x N routing of WDM optical signals. By incorporating cascaded optical steering devices into a single WDM switching device, cost effective 1 x N switching of WDM optical signals, where N = 4, 8, 16, etc., may be realized relative to prior art switching devices.

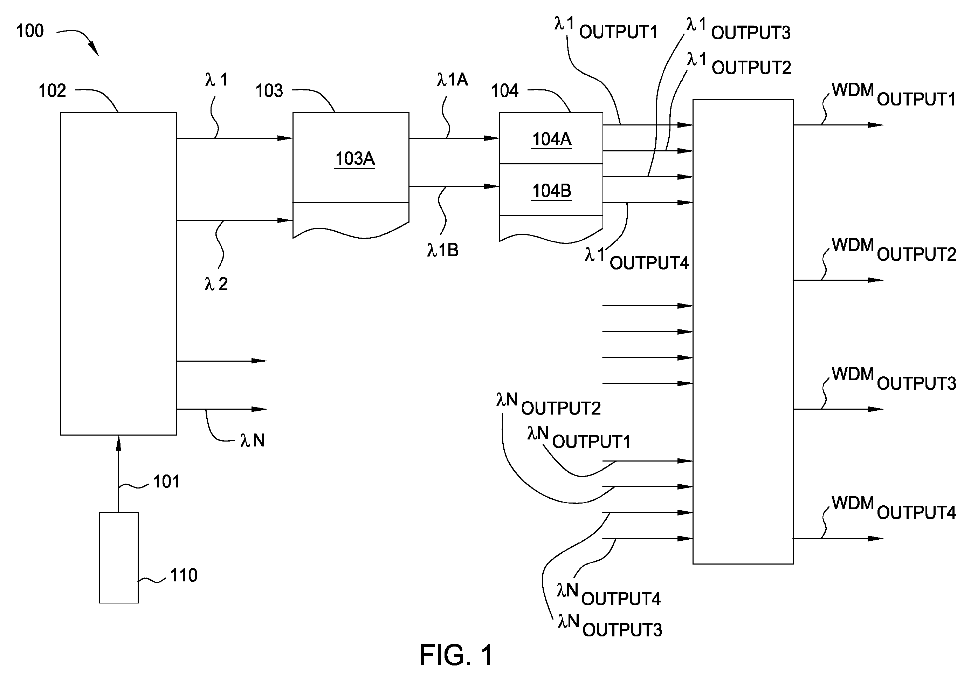

Figure 1 is a functional diagram of a WDM optical device according to an embodiment of the invention. Switching device 100 includes an optical input port 110, a demultiplexer 102, a first array 103 of optical steering devices, a second array 104 of optical steering devices, and a multiplexer 105. Optical input port 110 couples switching device 100 to other optical network components and directs a WDM signal 101, containing a plurality of wavelength channels, to demultiplexer 102. The number N of wavelength channels contained in WDM signal 101 may be as great as 50 or more. Demultiplexer 102 may be a diffraction grating, an arrayed waveguide grating (AWG), or other optical demultiplexing device known in the art, and is configured to spatially separate the wavelength channels λ1-λN of WDM signal 101 so that each wavelength channel λ1-λN is directed along a unique optical path. Each of wavelength channels λ1-λN is optically coupled to a dedicated optical steering device contained in first array 103. In the example shown in Figure 1, wavelength channel λ1 is directed to optical steering device 103A, and wavelength channels λ2-λN are each directed to other optical steering devices (not shown for clarity), which are also contained in first array 103.

As noted above, first array 103 contains a plurality of optical steering devices, each of which is positioned to correspond to a particular wavelength channel of WDM signal 101. These steering devices may be MEMS mirror-based or liquid crystal (LC) based. MEMS mirror-based optical steering devices are known in the art and may be configured to direct incident light along a first or second optical path, as required. An LC-based steering device may include an LC pixel configured to modulate the polarization of incident light and an optical element positioned downstream of the liquid crystal, such as a birefringent crystal or Wollaston prism. The molecular orientation of the liquid crystal modulates the polarization state of an incident light beam, and the optical element directs the beam along a first optical path, a second optical path, or both paths, based on the polarization state of the light.

In the example shown in Figure 1, optical steering device 103A directs wavelength channel λ1 along optical path λ1A and/or λ1B. When optical steering device 103A is MEMS mirror-based, the optical energy of wavelength channel λ1 is directed along either optical path λ1A or λ1B, thus performing a 1 x 2 optical switching operation on wavelength channel λ1. When optical steering device 103A is LC-based, the optical energy of wavelength channel λ1 may be directed entirely along optical path λ1A or λ1B, or divided therebetween as needed, thus performing 1 x 2 switching, signal attenuation, or broadcasting of wavelength channel λ1. In an attenuation operation, a portion of wavelength channel λ1 may be directed along one optical path, e.g., optical path λ1A, and the unwanted optical energy may be directed along another optical path, e.g., optical path λ1B, whereas in a broadcasting function, wavelength channel λ1 may be divided substantially equally between multiple optical paths. Wavelength channels λ2-λN are similarly processed by corresponding optical steering devices contained in first array 103.

Optical signals processed by first array 103 are optically coupled to second array 104, as shown schematically in Figure 1. Similar to first array 103, second array 104 includes a plurality of optical steering devices, which may be MEMS mirror-based or LC-based. In contrast to first array 103, second array 104 includes two optical steering devices for each wavelength channel of WDM signal 101, one for each output from first array 103. Each optical steering device of second array 104 is positioned to be optically coupled to a corresponding optical output path from first array 103, e.g., optical paths λ1A, λ1B, etc. In the example depicted in Figure 1, optical steering device 103A directs the optical energy of wavelength channel λ1 along optical paths λ1A and/or λ1B, where each optical path is optically coupled to a corresponding optical steering device contained in second array 104. Namely, optical path λ1A is directed to optical steering device 104A and optical path λ1B is directed to optical steering device 104B. Similarly, the output of first array 103 corresponding to the wavelength channels λ2-λN are optically coupled to additional optical steering devices (not shown for clarity) contained in second array 104.

The optical steering devices contained in second array 104, e.g., optical steering device 104A, optical steering device 104B, etc., are configured to direct incident light along a first and/or second optical path in the manner described above for optical steering device 103A. Specifically, optical steering device 104A is configured to direct optical energy following optical path λ1A along optical path λ1_{OUTPUT1} and/or optical path λ1_{OUTPUT2}, and optical steering device 104B is configured to direct optical energy following optical path λ1B along optical path λ1_{OUTPUT3} and/or optical path λ1_{OUTPUT4}. Thus, in combination with optical steering device 103A, optical steering devices 104A, 104B may perform 1 x 4 optical switching, signal attenuation, or broadcasting of wavelength channel λ1, or combinations thereof. For 1 x 4 optical switching, the optical energy of wavelength channel λ1 is directed along one of four possible optical paths, e.g., optical paths λ1_{OUTPUT1}, λ1_{OUTPUT2}, λ1_{OUTPUT3}, or λ1_{OUTPUT4}. For signal attenuation, a desired portion of the optical energy of wavelength channel λ1 may be directed along one optical path, e.g., optical paths λ1_{OUTPUT1}, λ1_{OUTPUT2}, or λ1_{OUTPUT3}, and the remaining, unwanted portion of optical energy is directed along another optical path, e.g, optical path λ1_{OUTPUT4}, which may be subsequently terminated at a loss port. For a broadcasting function, the optical energy of wavelength channel λ1 is equally divided between multiple optical paths. Wavelength channels λ2-λN are similarly processed by corresponding optical steering devices contained in first array 103 and second array 104.

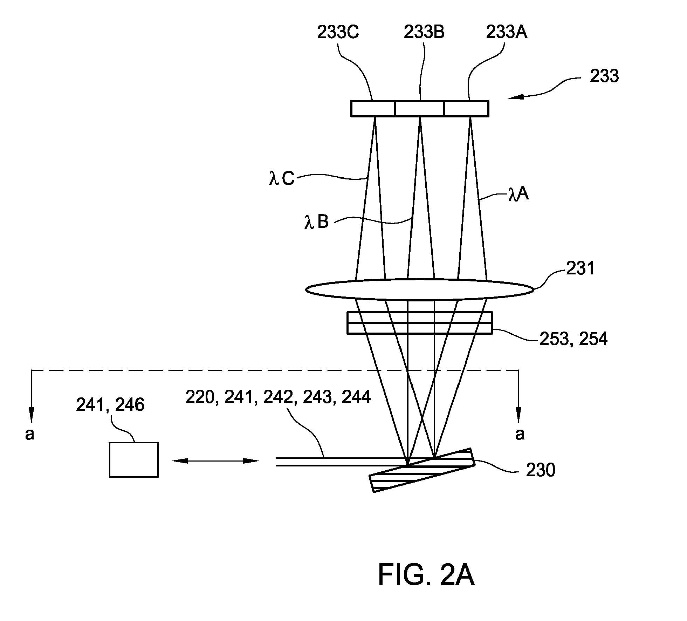

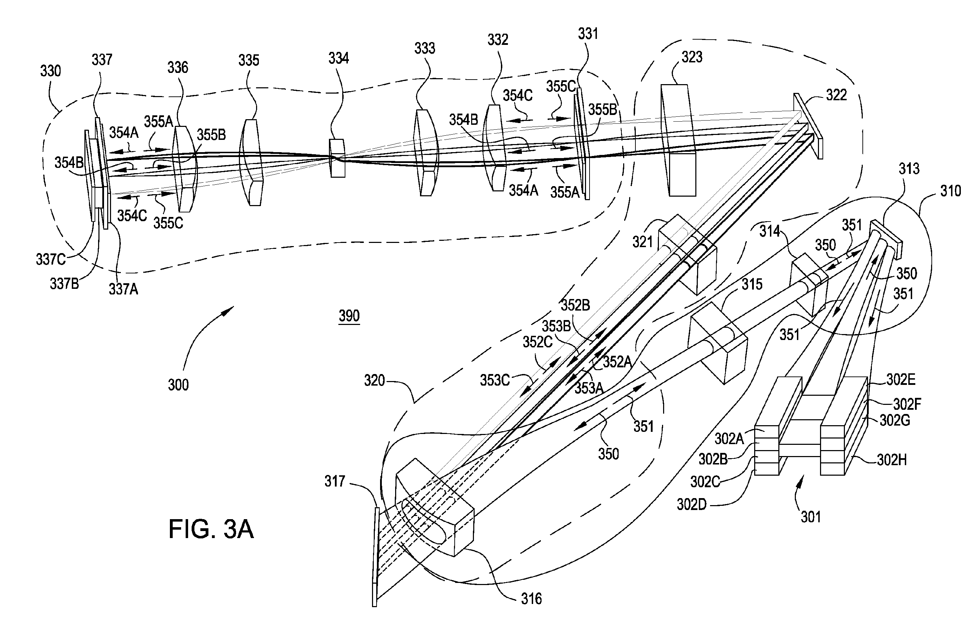

As shown in Figure 1, the output from second array 104 may include up to four optical paths for each wavelength channel of WDM signal 101. For example, for wavelength channel λ1, the output from second array 104 includes optical paths λ1_{OUTPUT1}, λ1_{OUTPUT2}, λ1_{OUTPUT3}, and λ1_{OUTPUT4}. For each wavelength channel of WDM signal 101, these optical paths are coupled to multiplexer 105. Multiplexer 105 then multiplexes optical signals output from second array 104 into four WDM output signals, WDM_{OUTPUT1}, WDM_{OUTPUT2}, WDM_{OUTPUT3}, and WDM_{OUTPUT4}, WDM_{OUTPUT1} consists of the signals from optical paths λ1_{OUTPUT1} - λN_{OUTPUT1}, WDM_{OUTPUT2}, consists of the signals from optical paths λ1_{OUTPUT2} - λN_{OUTPUT2}, WDM_{OUTPUT3}, consists of the signals from optical paths λ1_{OUTPUT3} - λN_{OUTPUT3}, and WDM_{OUTPUT4}, consists of the signals from optical paths λ1_{OUTPUT4} - λN_{OUTPUT4}. According to embodiments of the invention, further examples of optical switches capable of routing wavelength channels of a WDM input signal between multiple WDM output signals are described below in conjunction with Figures 2A-2D and 3A-3B.

First array 103 and second array 104 are "cascaded," *i.e.,* positioned to interact sequentially with an optical signal, thus advantageously incorporating a more involved switching function, *i.e.,* 1 x 4 switching, into a single WDM optical switching device. Embodiments of the invention also contemplate WDM switching devices containing additional arrays of optical steering devices to provide 1 x 8 switching, 1 x 16 switching, etc. The use of switching devices configured into cascaded arrays in a WDM optical switching device is more cost effective than configuring multiple 1 x 2 devices together. Cascaded switching devices may share many of the optical elements that make up a WDM switch, such as multiplexers, demultiplexers, and collimating and focusing optics, thereby reducing redundant components present between multiple 1 x 2 WDM switching devices. In addition, the size and per channel packaging costs of a single 1 x 4 or 1 x 8 switching device are substantially less than for multiple individual 1 x 2 switching devices.

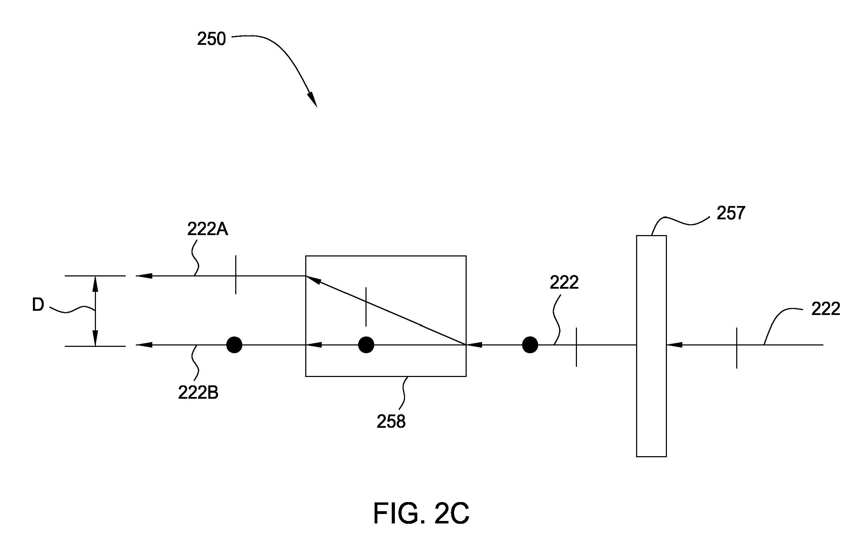

Figure 2A illustrates a schematic plan view of a wavelength selective switch (WSS) utilizing cascaded optical steering devices in accordance with one embodiment of the invention. WSS 200 includes an optical input port 245, an optical output port array 246, a diffraction grating 230, a lens 231, a micro-mirror array 233 made up of MEMS mirrors 233A-C, and optical steering device arrays 253, 254 containing LC-based optical steering devices. Each optical steering device contained in optical steering device arrays 253, 254 is configured to direct incident light along first and/or second optical paths, where the first and second optical paths are spatially separated from each other. Similar to the optical steering device 103A of Figure 1, each optical steering device contained in optical steering device arrays 253, 254 includes a polarization modulator and an optical element, and is described in detail below in conjunction with Figure 2C.

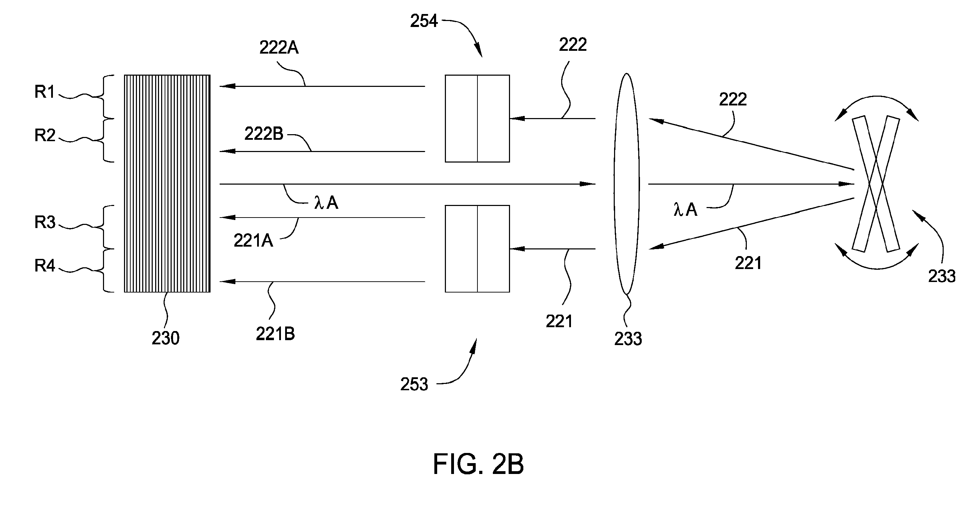

A collimated input beam 220 is first spatially separated into incoming wavelength channels λA-λC by diffraction grating 230. Diffraction grating 230 is shown separating input beam 220 into three incoming wavelength channels λA-λC. However, in practice, the number of incoming wavelength channels and of the corresponding MEMS mirrors of micro-mirror array 233 may be up to 50 or more. Incoming wavelength channels λA-λC are optically coupled to lens 231 by passing between optical steering device arrays 253, 254. Optical steering device arrays 253, 254 are located below and above the plane of incoming wavelength channels λA-λC, respectively. The relative vertical positions of incoming wavelength channels λA-λC, output beams 221, 222, and optical steering device arrays 253, 254 are described below in conjunction with Figure 2B. After incoming wavelength channels λA-λC pass between optical steering device arrays 253, 254, lens 231 focuses each of incoming wavelength channels λA-λC onto a different mirror "pixel" of the micro-mirror array 233. As shown, incoming wavelength channels λA-λC are focused onto MEMS mirrors 233A-C, respectively. Each of MEMS mirrors 233A-C is a separate, independently controlled element of micro-mirror array 233, and is configured to steer light incident thereon. Steering light incident on an element of micro-mirror array 233, e.g., MEMS mirror 233A, consists of orienting the element in a first or second position, reflecting the incident light, e.g., incoming wavelength channel λA and producing output beams 221 or 222, as shown in Figure 2B.

Figure 2B illustrates a schematic side view of WSS 200. For simplicity, the interaction of MEMS mirror 233A with incoming wavelength channel λA is described. It is understood that MEMS mirrors 233B, 233C operate substantially the same as MEMS mirror 233A, and interact in a similar fashion with incoming wavelength channels λB, λC, respectively. As described above, incoming wavelength channel λA is spatially separated from other wavelength channels by diffraction grating 230, passes between optical steering device arrays 253, 254, and is focused on MEMS mirror 233A by lens 231. MEMS mirror 233A produces either output beam 221 or output beam 222, by directing incoming wavelength channel λA along either of two optical paths via reflection. Lens 231 focuses output beams 221, 222 on optical steering device arrays 253, 254, respectively.

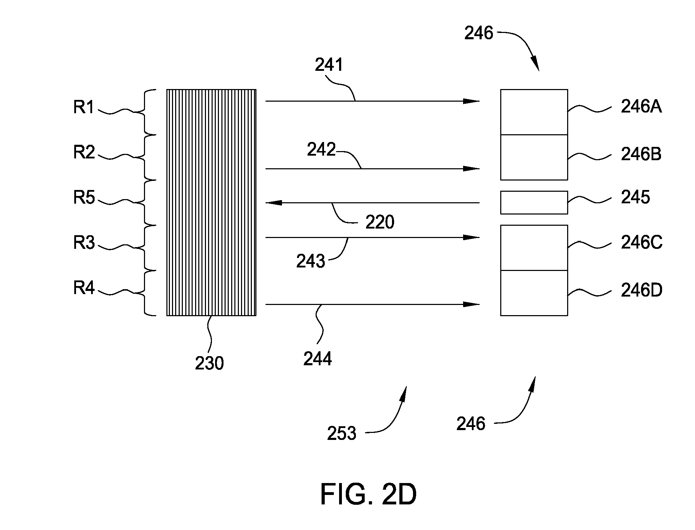

Optical steering device array 254 directs the optical energy of output beam 222 along upper optical path 222A, lower optical path 222B, or a portion along both, as desired. One configuration of optical steering device array 254 that may produce output beams 222A and/or 222B is described below in conjunction with Figure 2C. Upper optical path 222A and lower optical path 222B are separated by a vertical displacement, and therefore each is optically coupled to a unique region of diffraction grating 230. Namely, upper optical path 222A is optically coupled to region R1 and lower optical path 222B is optically coupled to region R2. Similarly, optical steering device array 253 produces output beams 221A and/or 221 B, which are optically coupled to regions R3 and R4, respectively. Diffraction grating 230 multiplexes any output beams that are optically coupled to region R1 into a single WDM output beam, output beam 241, illustrated in Figures 2A and 2D. Hence, output beam 241 may include a portion or all of the optical energy from any of incoming wavelength channels λA-λC, depending on the orientation of MEMS mirrors 233A-C and the configuration of optical steering device arrays 253, 254. Similarly, diffraction grating 230 multiplexes any output beams that are optically coupled to region R2 into output beam 242, output beams optically coupled to region R3 into output beam 243, and output beams optically coupled to region R4 into output beam 244.

As noted above, optical steering device arrays 253, 254 each include a plurality of LC-based optical steering devices, where each steering device is independently controlled and positioned to correspond to a unique wavelength channel spatially separated from a WDM input signal, *i.e.,* input beam 220. Figure 2C is a schematic side view of an LC-based optical steering device 250 that may be contained in optical steering device arrays 253, 254, according to one embodiment of the invention. Optical steering device 250 includes an LC pixel 257 and an optical element 258 positioned downstream of LC pixel 257, such as a birefringent crystal or Wollaston prism. The molecular orientation of the liquid crystal material in LC pixel 257 modulates the polarization state of an incident light beam, and the optical element 258 directs the beam along a first optical path, a second optical path, or both paths, based on the polarization state of the light.

In the example illustrated in Figure 2C, the light beam incident on LC pixel 257 is output beam 222 of Figure 2B, the first optical path corresponds to upper optical path 222A of Figure 2B, and the second optical path corresponds to lower optical path 222B of Figure 2B. Optical element 258 may be a birefringent crystal, such as a YVO₄ crystal, which may be oriented to produce a vertical displacement D between upper optical path 222A and lower optical path 222B. Alternatively, optical element 258 may be a Wollaston prism, which produces an angular vertical displacement between upper optical path 222A and lower optical path 222B. In either case, the vertical displacement produced by optical element 258 ensures that upper optical path 222A and lower optical path 222B are optically coupled to different regions of diffraction grating 230, as depicted in Figure 2B.

In operation, output beam 222 is initially p-polarized (denoted by the vertical line through the arrow representing output beam 222) and passes through LC pixel 257 of optical steering device 250. Output beam 222 is then either s- or p-polarized by LC pixel 257, depending on the current molecular orientation of the LC material contained in LC pixel 257. If output beam 222 is s-polarized by LC pixel 257 (denoted by a dot), the beam is not displaced by optical element 258, following lower optical path 222B. If output beam 222 remains p-polarized after passing through LC pixel 257, the beam is displaced by optical element 258, as shown, and follows upper optical path 222A. LC pixel 257 may modulate the polarization of output beam 222 between 100% s-polarized to 100% p-polarized, based on the potential difference applied across LC pixel 257. Hence, optical steering device 250 may selectively direct the optical energy of output beam 222 along upper optical path 222A, lower optical path 222B, or both.

Figure 2D is a partial schematic side view of WSS 200 taken from section line a-a in Figure 2A, and illustrates the relative vertical positions of input beam 220 and WDM output beams 241-244. Region R5 of diffraction grating 230, optical input port 245, and input beam 220 are positioned on a first vertical plane. Similarly, region R1 of diffraction grating 230, output beam 241, and optical output port 246A are positioned on another, unique vertical plane. The same is true for region R2, output beam 242, and optical output port 246B, region R3, output beam 243, and optical output port 246C, and region R4, output beam 244, and optical output port 246D. In this way, a WDM input signal is optically coupled to a diffraction grating for demultiplexing and up to four WDM output signals may be multiplexed and output by WSS 200 using the same diffraction grating. Hence, WSS 200 may perform 1 x 4 switching of a WDM input signal via two cascaded arrays of optical steering devices, *i.e.,* micro-mirror array 233 and optical steering device arrays 253, 254.

Figure 3A is a perspective view of a wavelength selective switch (WSS) containing cascaded arrays of LC-based optical steering devices, according to an embodiment of the invention. In the configuration shown, WSS 300 is a 1 x 4 WSS and includes an optical input port 301, an optical output port array 302, a first beam shaping/steering section 310, a diffraction grating 317, a second beam shaping/steering section 320, and a switching optics assembly 330. The components of WSS 300 are mounted on a planar surface 390 that is herein defined as the horizontal plane for purposes of description. In this configuration, WSS 300 performs wavelength separation in the horizontal plane and switching selection in the vertical plane.

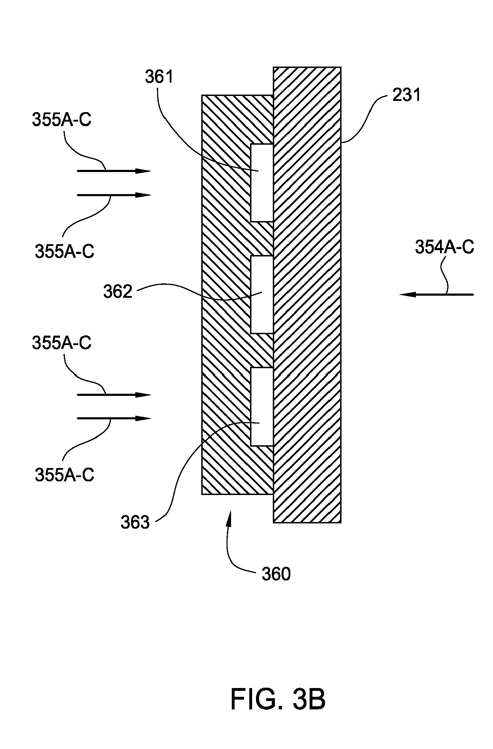

For illustrative purposes, inbound light beams 350, 352A-C, 354A-C, and outbound light beams 351, 353A-C, 355A-C are shown in Figure 3 to more clearly indicate the optical coupling of various elements of WSS 300. Because of the bidirectional nature of most components of WSS 300, light beams are directed along parallel inbound and outbound paths simultaneously between optical components of WSS 300. The inbound and outbound paths are displaced from each other vertically, and this vertical displacement is further described below. For clarity, a single light beam is used in Figure 3 to schematically represent both an inbound and outbound light beam between two optical components of WSS 300 rather than two beams that are vertically displaced with respect to one another. For example, inbound light beam 350 and outbound light beam 351 are schematically represented by a single light beam between folding mirror 313 and diffraction grating 317.

Optical input port 301 optically couples a WDM optical input signal (not shown) to WSS 300. Optical output port array 302 is, in the configuration shown in Figure 3, positioned proximate input port 301. Optical output port array 302 includes four vertically aligned optical output ports 302A-D and four vertically aligned loss ports 302E-H. Optical output ports 302A-D act as the optical output interface between WSS 300 and other components of a WDM optical communication system. Loss ports 302E-H serve as termini for light beams consisting of unwanted optical energy, for example wavelength channels blocked from a WDM output signal.

First beam shaping/steering section 310 includes a folding mirror 313, beam steering unit 314, and cylindrical lenses 315 and 316. First beam shaping/steering section 310 optically couples diffraction grating 317 with optical input port 301 and optical output port array 302, and shapes inbound beam 350 and outbound beam 351. First beam shaping/steering section 310 is also configured to direct outbound beam 351 to either a loss port or an optical output port contained in optical output port array 302, depending on the polarization state of outbound beams 353A-C. Inbound beam 350 and outbound beam 351 may each contain a plurality of wavelength channels that are multiplexed into a single, "white" beam. Beam steering unit 314 is configured to direct outbound beam 351 along two different optical paths depending on the polarization state of outbound beam 351. The two paths may be separated in the horizontal plane by an angular or translational offset.

Diffraction grating 317 is a reflective diffraction grating configured to spatially separate, or demultiplex, each wavelength channel of inbound beam 350 by directing each wavelength along a unique optical path. In so doing, diffraction grating 317 forms a plurality of inbound beams, wherein the number of inbound beams corresponds to the number of optical wavelength channels contained in inbound beam 350. In Figure 3A, diffraction grating 317 is shown to separate inbound beam 350 into three inbound beams 352A-C. However, in practice, the number of optical channels contained in inbound beam 350 may be up to 50 or more. Because the separation of wavelength channels by diffraction grating 317 takes place horizontally in the configuration shown in Figure 3, spectral resolution is enhanced by widening inbound beam 350 in the horizontal plane, as performed by cylindrical lens 316. Diffraction grating 317 also multiplexes outbound beams 353A-C into outbound beam 351.

Second beam shaping/steering section 320 includes a folding mirror 322, cylindrical lenses 316, 321, and a focusing lens 323. Second beam shaping/steering section 320 optically couples diffraction grating 317 with switching optics assembly 330, shapes inbound beams 352A-C and outbound beams 353A-C, and focuses inbound beams 352A-C on the first element of switching optics assembly 330, *i.e.,* beam polarization switching unit 331.

Switching optics assembly 330 includes an LC-based beam polarization switching unit 331, collimating lenses 332, 333, a beam steering unit 334, collimating lenses 335, 336, and an LC-based beam polarization and steering unit 337. The elements of switching optics assembly 330 are optically linked to enable the optical routing of a WDM optical input signal entering optical input port 301 to any one of the optical output ports 302A-D or loss ports 302E-H. The optical routing is performed by conditioning (via LC polarization) and vertically displacing inbound beams 352A-C to produce outbound beams 353A-C. Switching optics assembly 330 selectively determines the vertical displacement of outbound beams 353A-C to correspond to the vertical position of the desired output port, *i.e.,* optical output port 302A, 302B, 302C, or 302D, hence performing a 1x4 optical switching operation. In addition, switching optics assembly 330 may selectively condition each of inbound beams 352A-C to allow independent attenuation or blocking thereof. Further, switching optics assembly 330 performs the 1x4 switching operation with a high extinction ratio. Lastly, switching optics assembly 330 allows switching of outbound beam 351 between optical output ports 302A-D to be "hitless," *i.e.,* without the transmission of a signal to unwanted output ports, such as inactive output ports.

Beam polarization switching unit 331 includes an LC switching array 360 (shown in Figure 3B) and an array of transparent electrodes, which together are configured to condition the polarization of each of inbound beams 352A-C and produce inbound beams 354A-C. LC switching array 360 and the array of transparent electrodes are also configured to condition the polarization state of outbound beams 355A-C so that each beam, and therefore each wavelength channel of outbound beam 351, may be independently attenuated or directed to one of loss ports 302E-H. The electrodes are arranged vertically and horizontally to define individual LC pixels, the pixels being optically coupled to inbound or outbound beams as described below in conjunction with Figure 3B.

Figure 3B illustrates a schematic side view of beam polarization switching unit 331, inbound beams 354A-C, and outbound beams 355A-C. LC switching array 360 includes three horizontal arrays 361-363 of LCs. Each horizontal array 361-363 contains a plurality of LC pixels, one corresponding to each wavelength channel demultiplexed from inbound beam 350 by diffraction grating 317. Each of inbound beams 355A-C is directed through a corresponding LC of horizontal array 362. Each of outbound beams 355A-C is directed through a corresponding LC of horizontal array 361 and/or horizontal array 363 via up to four vertically displaced optical paths, as shown. How outbound beams are directed along up to four possible optical paths is described below in regard to beam steering unit 334 and beam polarization switching unit 337.

Referring back to Figure 3A, beam steering unit 334 is configured to direct inbound beams 354A-C along two different optical paths, *i.e.,* an upper and a lower path, depending on the polarization state of the beams. Hence, beam steering unit 334 operates in a similar manner to optical element 258 of Figure 2C. As noted above, the polarization state of inbound beams 354A-C is determined by the polarization conditioning performed by beam polarization switching unit 331. The two optical paths are separated angularly or by a translational offset in the vertical. In either case, the vertical offset between the two possible paths for inbound beams 354A-C indicates that inbound beams 354A-C may be directed to either an upper or lower region of beam polarization and steering unit 337. Beam steering unit 334 is also configured to direct outbound beams 355A-C back through beam polarization switching unit 331.

Similar to beam polarization switching unit 331, beam polarization and steering unit 337 includes an LC array 337A containing LCs and a plurality of transparent control electrodes. Beam polarization and steering unit 337 further includes a birefringent crystal 337B (e.g., a YVO₄ crystal) and a reflective element 337C (e.g., a mirror). Beam polarization and steering unit 337 is configured to direct each incident beam, *i.e.,* inbound beams 354A-C, along two different parallel optical paths, separated by a vertical offset, depending on the polarization conditioning by LC array 337A. Since each of inbound beams 354A-C may be directed to beam polarization and steering unit 337 along two possible sets of optical paths from beam steering unit 334, *i.e.,* an upper path or lower path, outbound beams 355A-C may be directed from beam polarization and steering unit 337 along any of four vertically displaced optical path sets.

WSS 300 in Figure 3A is configured to perform 1 x 4 routing of WDM optical signals. Embodiments of the invention also contemplate WDM optical devices using cascaded optical steering devices for 1 x N routing of WDM optical signals. For example, WSS 300 may be modified to perform more involved switching operations, such as 1 x 8 or 1 x 16 routing of WDM optical signals. According to one embodiment, switching optics assembly 330 of WSS 300 includes one or more additional optical steering devices that are "cascaded" with the other switching optics of switching optics assembly 330, *i.e.,* the additional optical steering devices are positioned between polarization steering assembly 331 and beam polarization and steering unit 337. In this way, the number of output ports to which WSS 300 may route optical signals is increased. For each additional optical steering device so positioned, the number of selectable output ports is doubled. Hence, WSS 300 may be easily expanded from 1 x 4 routing capability to 1 x 8 routing and higher.

Each additional optical steering device positioned in switching optics assembly 330 includes an LC array and a birefringent crystal, where the LC array contains a subgroup of LC pixels for conditioning each incident wavelength channel. Each subgroup of LC pixels includes one LC pixel positioned in each location at which the wavelength channel can be directed through the LC array. For example, if each wavelength channel can be directed through the additional optical steering device at eight possible conditioning locations, then the LC array includes eight LC pixels for each wavelength channel, one LC pixel being positioned at each of the eight possible conditioning locations. In combination with the birefringent crystal, each LC pixel is substantially similar in organization and operation to LC-based optical steering device 250 described above in conjunction with Figure 2C. The LC pixel selectively conditions the polarization of a linearly polarized, incident wavelength channel, and the birefringent crystal produces a spatial displacement between the s- and p-components of the wavelength channel. As noted above, LC conditioning of a wavelength channel is best carried out at a focal point of a light beam containing a wavelength channel. Therefore, for each additional optical steering device cascaded between polarization steering assembly 331 and beam polarization and steering unit 337, associated collimating and focusing optics are also provided for optimal performance of switching optics assembly 330.

While the foregoing is directed to embodiments of the present invention, other and further embodiments of the invention may be devised without departing from the basic scope thereof, and the scope thereof is determined by the claims that follow.

## Claims

1. An optical device comprising:
a diffracting element positioned in an optical path of an input beam for separating the input beam into its wavelength components; and
cascaded optical steering devices positioned to receive the wavelength components and configured to switch each of the wavelength components into at least one of N optical paths, where N is greater than or equal to 4.

2. The optical device according to claim 1, wherein the cascaded optical steering devices include a MEMS-based optical steering device and an LC-based optical steering device.

3. The optical device according to claim 2, wherein the MEMS-based optical steering device comprises a MEMS mirror and an LC-based optical steering device comprises a beam polarization switching unit and a beam deflecting unit.

4. The optical device according to claim 3, wherein the beam deflecting unit comprises one of a birefringent crystal and a Wollaston prism.

5. The optical device according to claim 1, wherein the cascaded optical steering devices include two or more LC-based optical steering devices.

6. The optical device according to claim 5, wherein each of the LC-based optical steering devices comprises a beam polarization switching unit and one of a birefringent crystal and a Wollaston prism.

7. The optical device according to claim 1, wherein the diffracting element is positioned to receive the wavelength components after they have been switched by the cascaded optical steering devices.

8. The optical device according to claim 7, wherein the diffracting element comprises a diffraction grating.

9. The optical device according to claim 7, wherein the diffracting element comprises an arrayed waveguide grating.

10. A wavelength selective switch comprising cascaded optical steering devices, wherein one of the cascaded optical steering devices includes an LC cell for polarizing incoming light beams and a beam deflecting unit for directing the incoming light beams to at least one of two optical paths in accordance with their polarization.

11. The wavelength selective switch according to claim 10, wherein another one of the cascaded optical steering devices includes a MEMS mirror.

12. The wavelength selective switch according to claim 11, wherein the cascaded optical steering devices are configured to direct an incoming light beam into at least one of N optical paths, where N is at least 4.

13. The wavelength selective switch according to claim 10, further comprising a diffracting element for separating an input beam into its wavelength components before the input beam reaches the cascaded optical steering devices.

14. The wavelength selective switch according to claim 13, wherein the diffracting element is positioned to receive the wavelength components of the input beam after they have passed through the cascaded optical steering devices.

15. A 1xN wavelength selective switch comprising:
an input port;
a diffracting element for separating an input beam into its wavelength components;
an optical switch assembly positioned to receive the wavelength components from the diffracting element and including a reflective element for redirecting the wavelength components onto the diffracting element; and
a plurality of output ports for receiving at least one output beam generated by the diffracting element from the wavelength components,
wherein the optical switch assembly includes at least two optical steering devices that are arranged in a cascaded manner.

16. The 1xN wavelength selective switch according to claim 15, wherein one of the optical steering devices of the optical switch assembly includes an LC cell for polarizing incoming light beams and a beam deflecting unit for directing the incoming light beams to at least one of two optical paths in accordance with their polarization.

17. The 1xN wavelength selective switch according to claim 16, wherein the LC cell has a plurality of pixels, each of which is independently controlled to impart a desired polarization change to a light beam passing therethrough.

18. The 1xN wavelength selective switch according to claim 15, wherein one of the optical steering devices of the optical switch assembly includes a plurality of MEMS mirrors, each of which independently controlled to direct a light beam incident thereon onto a desired optical path.

19. The 1xN wavelength selective switch according to claim 15, wherein N is greater than or equal to 4.

20. The 1xN wavelength selective switch according to claim 19, further comprising N loss ports for receiving at least one output beam generated by the diffracting element from the wavelength components.
